# EUROPEAN PATENT SPECIFICATION

(11) **EP 1 506 148 B1**
(45) Date of publication and mention of the grant of the patent: **28.05.2008**
(21) Application number: 03755060.5
(22) Date of filing: 20.03.2003
(51) Int. Cl.: C07B 53/00, C07F 15/00, C07B 37/04

(54) **PROCESS FOR THE PREPARATION OF ENANTIOMERICALLY ENRICHED COMPOUNDS**
VERFAHREN ZUR HERSTELLUNG VON ENANTIOMERENANGEREINIGTEN VERBINDUNGEN
PROCEDE DE PREPARATION DE COMPOSES ENRICHIS EN ENANTIOMERES

(30) Priority: 23.05.2002 EP 02100556
(43) Date of publication of application: 16.02.2005
(73) Proprietor: DSM IP Assets B.V., 6411 TE Heerlen (NL)
(72) Inventor: MINNAARD, Adriaan, Jacobus, NL-9801 BB Zuidhorn (NL); FERINGA, Ben, NL-9765 EP Paterswolde (NL); IMBOS, Rosalinde, NL-9713 XR Groningen (NL); BOITEAU, Jean-Guy, F-34130 Saint-Aunes (FR)
(74) Representative: Hermans, Edith E.H.
(86) International application number: PCT/NL2003/000211
(87) International publication number: WO 2003/099745

(56) References cited:
- MANFRED T. REETZ ET AL.: "BINOL-Based Diphosphinites as Ligands in the Asymmetric Rh-Catalyzed Conjugate Addition of Arylboronic Acids" ORGANIC LETTERS, vol. 3, no. 25, 16 November 2001 (2001-11-16), pages 4083-5, XP002217462 cited in the application
- TAMIO HAYASHI: "Rhodium-Catalyzed Asymmetric 1,4-Addition of Organoboronic Acids and Their Derivatives to Electron Deficient Olefins" SYNLETT 2001, vol. SI, 2001, pages 879-87, XP002217463 cited in the application
- BEN L. FERINGA ET AL.: "Highly Enantioselective Catalytic Conjugate Addition and Tandem Conjugate Addition - Aldol Reactions of Organozinc Reagents" ANGEW. CHEM. INT. ED., vol. 36, no. 23, 1997, pages 2620-3, XP002217464

## Description

The invention relates to a process for the preparation of enantiomerically enriched compounds with formula Ar -C(R¹)-C(R²)-Z wherein Ar represents an (hetero)aryl group, R¹ and R², each independently, represent H, an alkyl, (hetero)aryl, dialkyl-amino, amido, thioether, alkoxy or aryloxy group with the proviso that not both R¹ and R² represent H, or R¹ and R², or R¹ and Z or R² and Z form together with the C-atoms to which they are bound a (hetero)alkyl or (hetero)alkenyl ring with, for instance, 2-20 C-atoms and Z represents an electron withdrawing group, in which process a boronic acid derivate of formula Ar- B(OR³)OR⁴ or its anhydride, wherein Ar is the same as described above and R³ and R⁴, each independently, represent H or an alkyl group with, for instance, 1-6 C-atoms, is reacted with an olefinic unsaturated compound with formula R¹ - C = C - (R²) Z, wherein R¹, R² and Z are the same as described above, in the presence of a transition metal catalyst comprising a transition metal which is Rh and an enantiomerically enriched ligand L.

Rhodium catalyzed asymmetric 1,4 addition of organoboronic acids to olefins is described by Hayashi in Synlett 2001, No. SI, 879-887, wherein use is made of Binap as enantiomerically enriched ligand, and by M. Reetz in Org. Lett., 2001, 3, 4083-4085 wherein use is made of BINOL-based diphosphonites.

A drawback of the known process is that the reaction is rather slow and thus a higher reaction temperature and/or a longer reaction time is required.

The present invention now provides a process for the asymmetric arylation of olefinic unsaturated compounds with higher reaction rate.

This is reached according to the invention by using as the ligand L an enantiomerically enriched ligand having the formula (I) 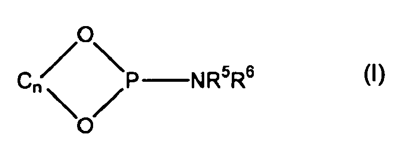 where Cₙ together with the two O-atoms and the P-atom forms a substituted or non-substituted ring with 2-6 C-atoms, R⁵and R⁶ each independently stand for H, an optionally substituted alkyl, aryl, alkaryl or aralkyl group, or represent the group with formula (II) 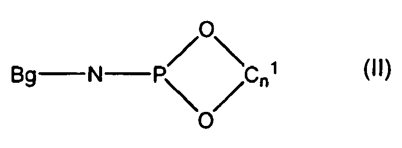 wherein Cₙ¹ may have the same meanings as given for Cₙ throughout the whole specification and Bg represents a bridging group or R⁵ and R⁶ may form a heterocyclic ring together with the N-atom to which they are bound. The enantiomerically enriched ligands may thus be mono-, bi or tridentate ligands. Preferably monodentate ligands are used when arylated products with high ee are aimed at.

An additional advantage of the process of the present invention is that as a rule the ligands L can be simply prepared in one or two steps from commercially available starting materials. Such a ligand is disclosed by B. Feringa in Angew. Chem. lnt. Ed. Engl. 1997, 36 no. 23, 2620-2623 were it is used in a catalyzed asymmetric 1,4 addition of dialkyl zinc compounds to enones.

Using a catalyst according to the invention in the asymmetric arylation of an olefinic unsaturated compound, enantiomerically enriched compounds can be obtained with an ee of > 60%, in particular > 80%, more in particular > 95%.

The alkyl, aryl, aralkyl and alkaryl groups in R⁵ and R⁶ and the ring of R⁵ and R⁶ together with the N-atom to which they are attached, preferably have 1-20 C-atoms and can optionally be substituted with, for instance, one or more keto, hydroxy, alkoxy, nitrile or carboxylic ester groups, or halogens. Preferably R⁵ and R⁶ each independently represent an alkyl group, for instance an alkyl group with 1-6 C-atoms, in particular 1-3 C-atoms, most preferably R⁵ and R⁶ represent an ethyl group. R⁵ and/or R⁶ may be part of a polymeric backbone.

The bridging group Bg may be for example CO, an alkylene, alkenylene, arylene, naphtalene or heteroarylene group, or a combination thereof, with, for instance, 1-20 C-atoms, preferably 1-8 C-atoms. The alkylene, alkenylene, arylene, naphtalene or heteroarylene group may contain one or more heteroatoms, for instance N, O, P or S, and/or be substituted with one or more substituents that are inert in the reaction system. Suitable substituents, having preferable 0-60 C-atoms, are for instance alkyl, aryl, alkoxy, keto, aryloxy, ester, ether, nitrile, amido or carbamate groups. Each pair of substituents may form together with the C-atoms to which they are bound, a 4-8 membered ring which may be fused with other rings. Suitable examples of Bg are CO, oxalyl, maleyl, succinyl, 1,2-ethylene, 1,2-propylene, 1,3-propylene, 1,4-butylene, 1,2-cyclopropylidene, 1,2-cyclobutylidene, 1,3-cyclobutylidene, 1,2 cyclopentylidene, 2,3-norbornylidene, 2,5-norbornylidene, *ortho-, meta- or para-*phenylene, 1,2 furylidene, -(CH₂ CH₂O CH₂ CH₂)-, esters of lysine or ornithine. The bridging group may be chiral or non-chiral.

The transition metal catalyst used according to the invention comprises a transition metal which is Rh. The catalyst according to the invention may consist of a preformed complex or may be prepared in situ. A suitable catalyst may be prepared for instance by combining the enantiomerically enriched ligand with a catalyst precursor.

The catalyst precursor may be for instance in the form of a metal, or a salt, a complex or a cluster of the metal, or oligomeric or polymeric forms of the metal or the salt, complex or cluster thereof. Preferably, the catalyst precursor is a complex, for instance represented by the formula MXₐS_{b}, wherein a and b each independently are between and including 0-5.

S represents an extra ligand which may be present or not and which may be chiral or non chiral. Suitable ligands S are phosphorus-based ligands, such as phosphines, phosphites, phosphinites, phosphonites or phosphoramidites; olefins, for example maleic anhydride or ethylene; dienes, for example 1,5-cyclooctadiene, 1,3-butadiene and 2,5-norbornadiene; aromatics, for example benzene, hexamethyl benzene, cymene and cumene, eta-5 coordinated cyclopentadienyl ligands, for example cyclopentadienyl and pentamethyl-cyclopentadienyl; or CO, or a solvent, for instance acrylonitrile.

The counter ion X may be an anion or a cation. Examples of suitable anions are CI, Br, I, OAc, BF₄, PF₆, SbF₆, CIO₄, p-toluene sulphonate, benzene phosphonate, tetra-pentafluorophenylborate, or, preferably, optionally substituted acetylacetonate (acac). If the catalyst is anionic, X is a cation. Examples of suitable cations are alkaline metals, for example Li, Na or K, alkaline earth metals such as Mg or Ca, or ammonium, or alkyl-substituted ammonium.

The catalyst may be formed *in situ* by adding the enantiomerically enriched ligand to a solution of a catalyst precursor. Preferably, the catalyst precursor and the enantiomerically enriched ligands and optionally the extra ligand(s) are stirred together in solution for a certain period that may range from a few minutes to several hours, for instance 5 to 30 minutes, before contacting with the reactants. In general 10-20 minutes will be sufficient. It is also possible to combine the catalyst precursor and the chiral ligand. Next, after stirring for a certain period, the solvent is removed by evaporation or by filtration. Subsequently the residue may be dissolved in the same or a different solvent. The catalyst may optionally be added in dimeric form, with the dimeric form subsequently wholly or partly changing in situ into the monomeric form.

The amount of enantiomerically enriched monodentate ligand to be added for example may range from 0.5 to 5, preferably from 2 to 4, equivalents relative to the metal. The amount of enantiomerically enriched bi- or tridentate ligand to be added for example may range from 0.25 to 2, preferably from 0.6 to 1.2. Preferably a small excess of optically active ligand is applied relative to the desired amount of optically active ligand in the catalyst. The optimum ratio of optically active ligand to metal in the catalyst may differ per optically active ligand and per metal and can readily be determined by means of experiments. It may be advantageous in certain cases to use a mixture of more than 1 optically active ligand. It may be advantageous to adjust the oxidation state of the catalyst by adding a reducing agent, such as NaBH₄, Zn or a Grignard reagent.

Examples of suitable catalyst precursors, which together with the chiral ligand form the catalyst, are (acac = acetylacetonate, COD = 1,5 cyclooctadiene; COE = cyclooctene, nbd = norbornadiene L = ligand I of the invention, S = a ligand as defined above, n=0-12): [Rh(acac)(C₂H₄)₂], [Rh(acac)(COE)₂], [Rh (COD)Cl]₂, [Rh(COD)(MeCN)₂]BF₄, [Rh(COD)₂]BF₄, [Rh(nbd)₂]BF₄, [Rh(acac)(CO)₂], [Rh(nbd)₂]ClO₄.

Examples of preformed complexes are [RhL₂(acac)], Rh(COD)L₂BF₄. In case the ligand is bidentate L₂ becomes L in these preformed complexes. Also L₂ may refer to a mixture of two different optically active ligands.

Specifically preferred catalysts are the catalysts comprising a transition metal M, an enantiomerically enriched ligand L, an extra ligand S and a counterion X wherein M is Rh, S is (C₂H₄)₂, X is acetylacetonate and L is a ligand with formula I 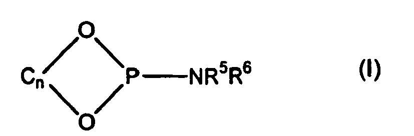 where Cₙ together with the two O-atoms and the P-atom forms a substituted or non-substituted ring with 2-6 C-atoms, R⁵ and R⁶ each independently stand for H, an optionally substituted alkyl, aryl, alkaryl or aralkyl group, or represent the group with formula (II) 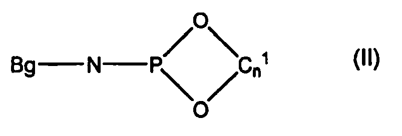 wherein C¹ₙ may have the same meanings as given for Cₙ and Bg represents a bridging group, or R⁵ and R⁶ may form a heterocyclic ring together with the N-atom to which they are bound, for example a substituted or unsubstituted 4-8 membered ring having for instance 3-20 C-atoms. The invention, therefore, also relates to such catalysts.

In the enantiomerically enriched ligand L of formula (I) Cₙ and/or R⁵ and/or R⁶ are chiral or are part of a chiral entity. Cₙ preferably represents a chiral substituted C₄ chain (chain with 4 optionally substituted C-atoms), of predominantly one configuration, for example with an enantiomeric excess larger than 95%, in particular larger than 99%, more in particular larger than 99.5%. Cₙ may be substituted with one or more substituents that are inert in the reaction system. Suitable substituents preferably have 0-60 C-atoms. Examples of such substituents for Cₙ are, for instance alkyl, aryl, alkoxy, aryloxy, (unsaturated) ester, ether, nitrile, nitro,amido or carbamate groups, CF₃ or halogens. Each pair of substituents may form together with the C-atom(s) to which they are bound, a 4-8 membered ring which may be fused with other rings. Preferably Cₙ together with the two O-atoms and the P-atom forms a 7-membered ring with 4 C-atoms which 2 by 2 form part of an (hetero)aryl group or a naphthyl group, most preferably a tetrahydronaphtyl group. Very good results are obtained using an enantiomerically enriched ligand with formula I wherein Cₙ together with the two O-atoms to which it is attached and the P-atom to which the O-atoms are attached, forms a 7-membered ring with 4 C-atoms which 2 by 2 form part of a tetrahydronaphtyl group (e.g. formula 22 below), and wherein R⁵ and R⁶ each independently represent a lower alkyl group with for instance 1-3 C-atoms, in particular wherein R⁵ and R⁶ represent ethyl Examples of suitable enantiomerically enriched ligands according to the invention are

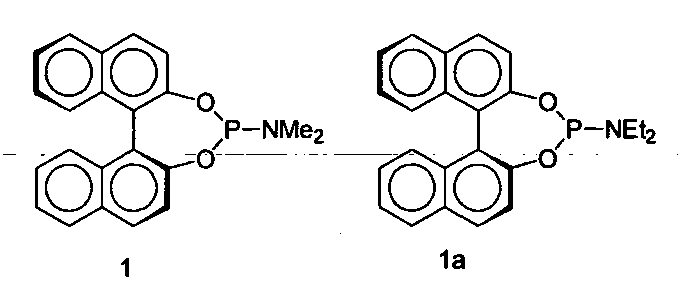

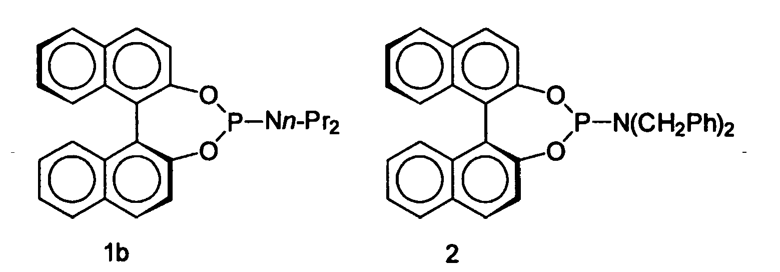

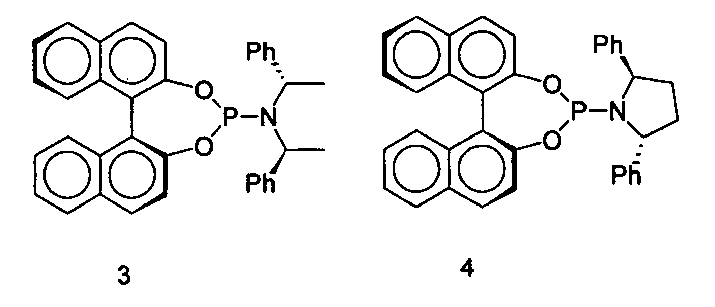

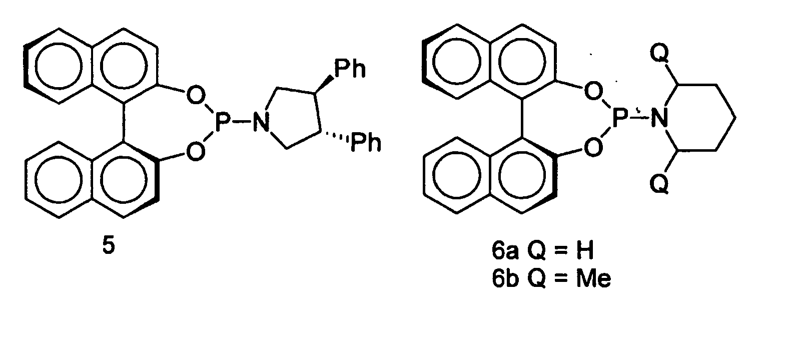

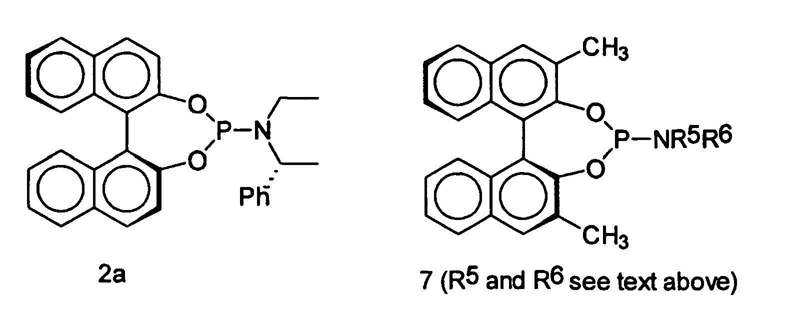

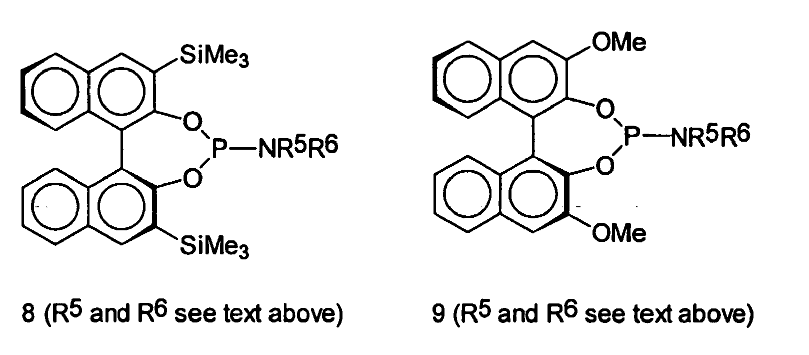

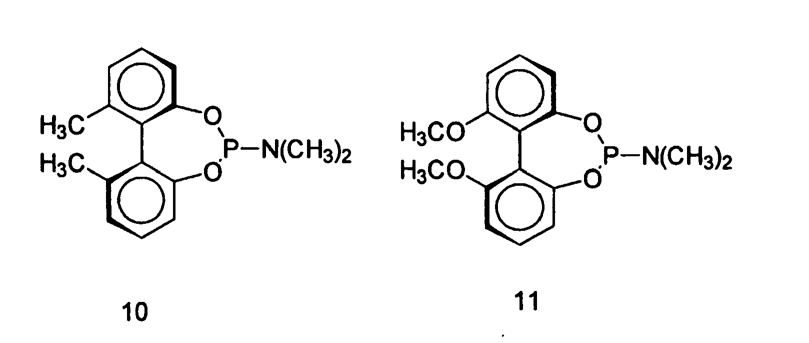

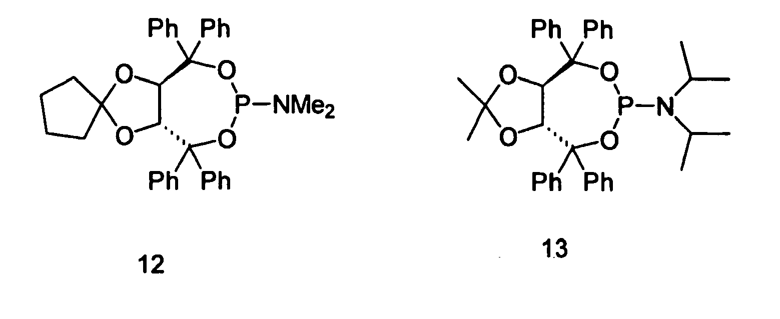

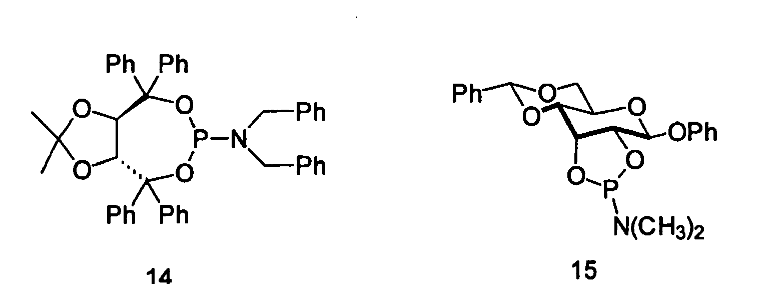

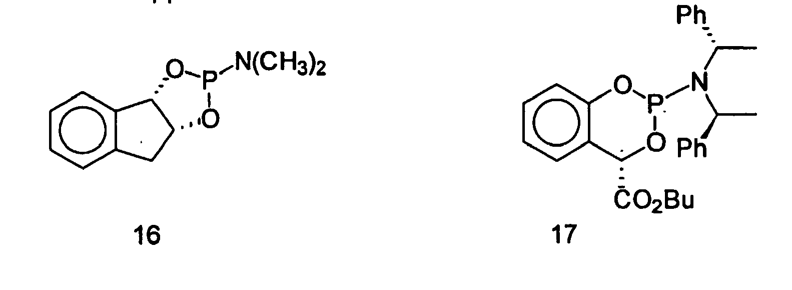

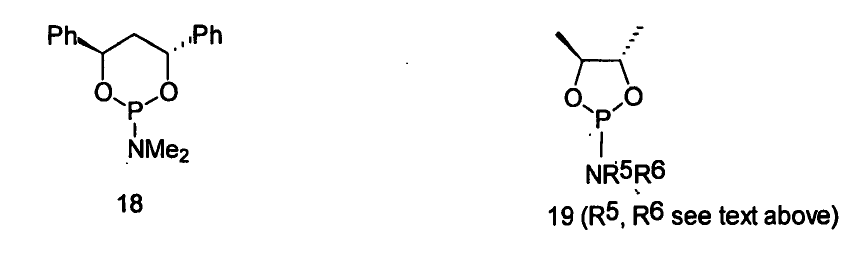

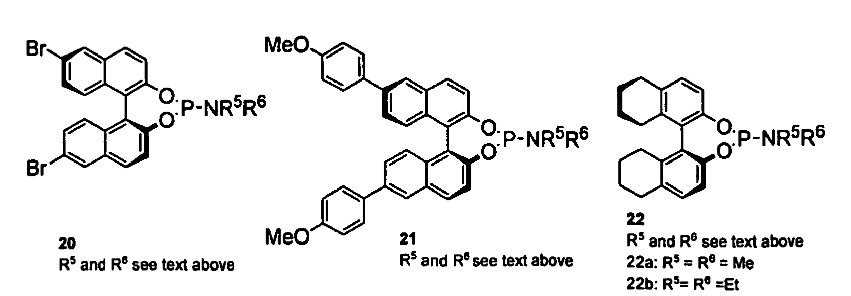

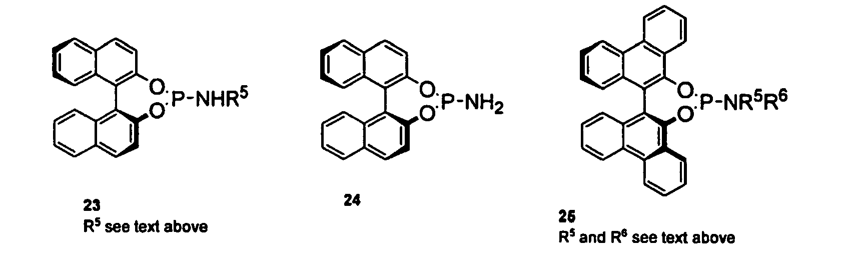

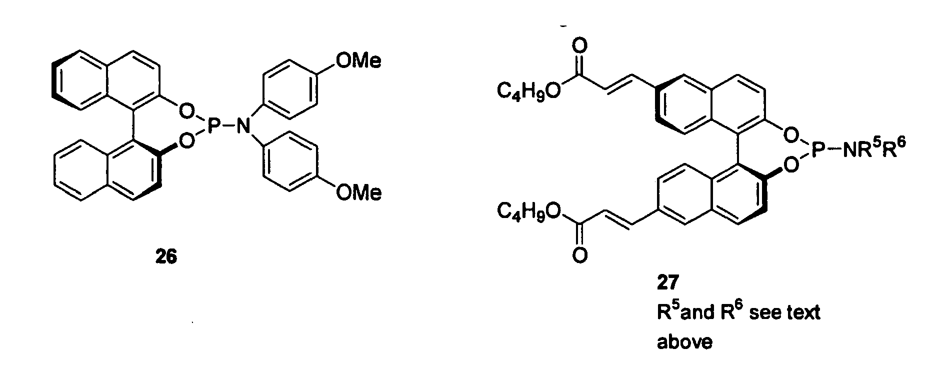

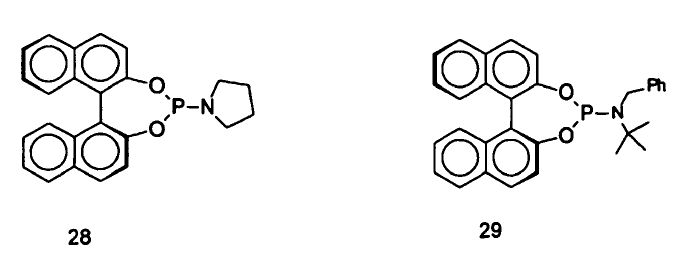

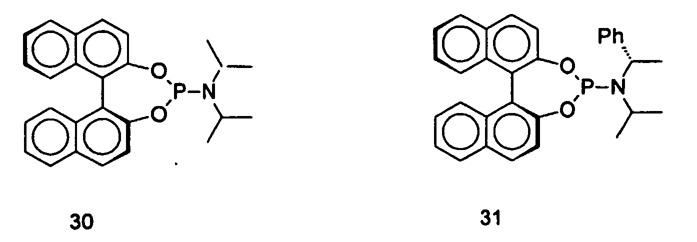

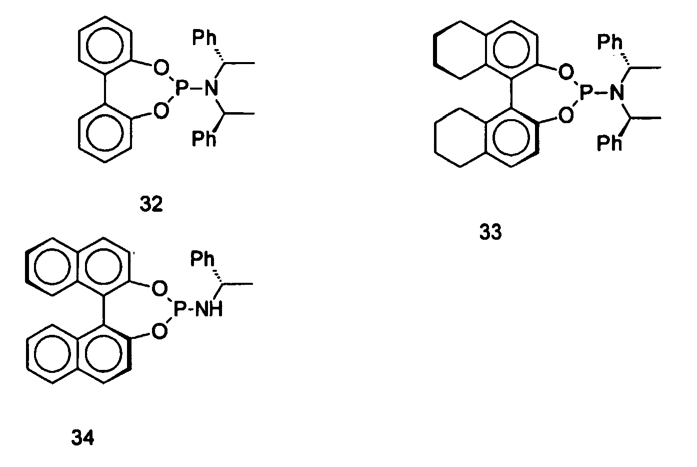

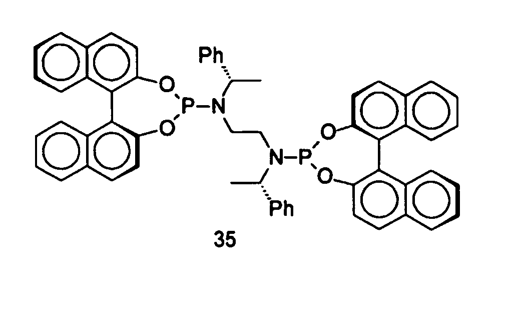

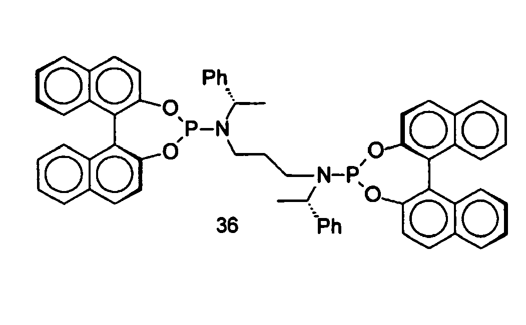

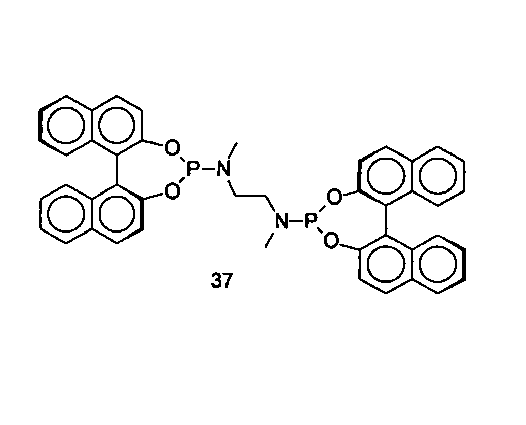

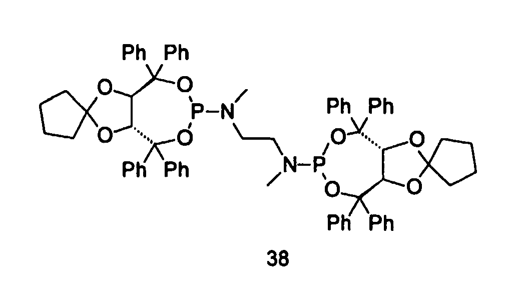

It will be understood that where one enantiomer is represented, the other enantiomer is similarly applicable.

Such ligands with formula (I) can simply be prepared as described for example in Houben-Weyl Methoden der Organischen Chemie Band XII/2. Organische phosphorverbindungen. G. Thieme Verlag, Stuttgart, 1964, Teil 2 (4th ed.), pp. 99-105. A preferred preparation method is based on the reaction of an HO-Cₙ-OH compound with P(NMe₂)₃ or P(NEt₂)₃ (Me = methyl, Et = ethyl), with subsequent reaction with R⁵R⁶NH, preferably in a solvent having a boiling point > 80 °C, for example toluene. Examples of suitable catalysts for the latter reaction are ammonium chloride, tetrazole or benzimidazoliumtriflate. Examples of HO-Cₙ-OH are chiral bisnaphtols for example (*R*)- or (*S*)- 1,1'-bi-(2-naphthol), chiral bisphenols for example (*R*)- or (*S*)- 6,6'-dimethoxy-2,2'-bisphenol, diols, for example (*R,R*)- or (*S,S*)-2,2-dimethyl-1,3-dioxolane-4,5-bis-(1,1-diphenyl)methanol (TADDOL), or (*S,R*) or (*R,S*)-indane-1,2-diol; 1,2-diols and 1,3-diols based on sugars, for example diols having the formula:

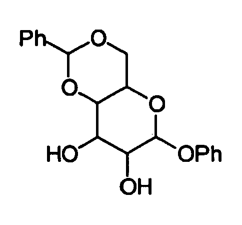

Examples of R¹R²NH are benzyl amine, dibenzyl amine, diisopropyl amine, (R)- or (S)-1-methyl-benzyl amine, piperidine, morpholine, (*R*,*R*)- or (*S*,*S*)-bis-(1-methylbenzyl)amine.

A second preferred preparation is based on the reaction of an HO-Cₙ-OH compound with PCl₃, with subsequent reaction with R⁵R⁶NH, preferably in the presence of a base, for example Et₃N, and in the presence of a solvent, for example toluene. Examples of HO-Cₙ-OH are in principle the same as mentioned above in relation to the first preferred preparation. Examples of R⁵R⁶NH are ammonia, benzyl amine, dibenzyl amine, diisopropyl amine, (*R*)- or (*S*)-1-methyl-benzyl amine, piperidine, morpholine, (*R*,*R*)- or (*S,S*)-bis-(1-methylbenzyl)amine.

The bi- or tridentate ligands of the invention may be prepared in similar fashion, by replacing the amine R⁵R⁶NH with a bridged diamine compound (R⁶)HN-B-NH(R⁶). It is also possible to prepare non-symmetrical bidentate phosphoramidite ligands. This can be accomplished by reacting a group (R⁶)NH-BNH(R⁶) first with 1 equivalent of 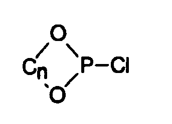 After this reaction the remaining amino group is reacted with 1 equivalent of 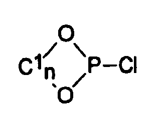 The invention also relates to the preparation of the enantiomerically enriched ligands of formula I.

Suitable substrates for the asymmetric arylation reaction are unsaturated compound with formula R¹ - C =C - (R²)Z, wherein R¹ and R², each independently, represent H, an alkyl, (hetero)aryl, dialkylamino, amido, alkoxy, aryloxy or thioether group with, for instance 1-20 C-atoms (including any substituents) with the proviso that not both R¹ and R² represent H, or R¹ and R² form together with the C-atoms to which they are bound a (hetero)alkyl or (hetero)alkenyl ring with, for instance, 2-20 C-atoms including any substituents, or R¹ and Z, or R² and Z form together with the C-atom(s) to which they are bound a ring, preferably a 5-12 membered ring, for instance a cyclic ketone, a lactone or a lactam. Examples of R¹ and R² are: hydrogen, alkyl groups, for example methyl, ethyl, isopropyl, butyl; (hetero)aryl groups, for example phenyl, 4-biphenyl, 1-napthyl, 2-naphthyl, 2-furyl, 3-furyl, 2-indenyl, 2-indolinyl or 2-quinolinyl; disubstituted amine groups for example dimethylamino, dibenzylamino, methylbenzylamino, methylanilinyl, N-piperidinyl or *N-*pyrrolyl, or N-pyrrolidinyl or N-morpholinyl; amide groups, for example aminocarbonyl, ethylaminocarbonyl, dimethylaminocarbonyl or benzylaminocarbonyl; thioether groups for example methylmercapto, benzylmercapto, phenylmercapto; alkoxy groups, for example methoxy, ethoxy, benzyloxy; or (hetero)aryloxy groups for example phenoxy, 2-fluorophenoxy or 2-furanyloxy. R¹ and/or R² are optionally substituted with one or more substituents that are inert in the reaction system. Suitable substituents preferably have 0-60 C-atoms. Examples of such substituents for R¹ and R² are for example halogens; alkyl groups with for instance 1-10 C-atoms, aryl groups with for example 1-10 C-atoms, for instance phenyl, alkoxygroups with for instance 1-10 C-atoms, aryloxygroups with for instance 6-10 C-atoms, (unsaturated) ester, ether, nitrile, nitro, amido or catbamate groups, and Z represents an electron withdrawing group. Suitable examples of Z are ester groups for example a methoxycarbonyl, ethoxycarbonyl, isopropoxycarbonyl, benzyloxycarbonyl, phenoxycarbonyl or a 2-methoxyethoxycarbonyl group; amide groups for example aminocarbonyl, ethylaminocarbonyl, dimethylaminocarbonyl or benzylaminocarbonyl; acyl groups, for example acetyl, propionyl, benzoyl, 1-naphthoyl, 2-naphthoyl, 2-picolyl, 4-phenylbenzoyl, 4-nitrobenzoyl or m-fluorobenzoyl; a nitro group or a nitrile or a phosphonate ester, for example dietyl phosphonate or dibenzylphosphonate, sulfoxides for example methylsulfinyl or phenylsulfinyl; a sulfone, for example methylsulfonyl or phenylsulfonyl, 2-naphthylsulfonyl or 2-furylsulfonyl. It is understood that all the above mentioned groups may carry further substituents.

Examples of substrates are Z and E isomers of 2- and/or 3-substituted acrylate esters, for example methyl methacrylate, propyl 2-pentenoate, butyl crotonate, ethyl itaconate or butyl cinnamate; alpha-beta-unsaturated lactones, for example as delta 2-butenolactone or epsilon 2-pentenolactone; cyclic anhydrides, for example maleic anhydride or 2-methyl maleic anhydride; alpha-beta unsaturated amides, for example crotylamide or cinnamide, or alpha-beta unsaturated lactams, for example N-benzyl 5,6-dihydro-2- (1*H*)-pyridinone or 5,6-dihydro-2- (1*H*)-pyridinone, nitro-olefins, for example 2-nitro-propene or 1-nitro-cyclohexene; alpha-beta unsaturated ketones, for example methyl vinyl ketone, 3-nonen-2-one or 5-methyl-3-hexen-2-one, cyclic enones, for example 2-cyclopentenone, 2-cyclohexenone, 2-cycloheptenone or 5,6-dihydro-4 (1*H*)-pyridinone; alpha beta unsaturated nitriles, for example crotonitrile or methacrylonitrile or 2-cyanocyclopentene, alpha-beta unsaturated phosphonates, for example diethyl 1-propenephosphonate or dimethyl 1-cyclohexenephosphonate; 1,2-dehydro amino acid derivatives, for example methyl 2-acetamido-acrylate, ethyl 2-N-benzyloxycarbamoyl-cinnamate.or ethyl 3-acetamido-cinnamate.

The arylating agent is a boronic acid derivate of formula Ar - B(OR³)OR⁴ or its anhydride, wherein R³ and R⁴, each independently, represent H or an alkyl group with for instance 1-6 C-atoms, for example methyl, ethyl, propyl or together with the BO₂ form a ring with for instance 1-6 C-atoms, in which case R³R⁴ may represent, for instance, ethylene, propylene or 2,3-dimethyl 2,3-butylene. Ar represents an (hetero) aryl group with, for instance, 3-20 C-atoms, preferably 4-10 C-atoms. Suitable examples of Ar are phenyl, (*o*-, *m*- *or p*-) nitro-phenyl, (*o*-, *m*- *or p*-) chlorophenyl, (*o*-, *m*- *or p-)* tolyl, (*o*-, *m*- *or p*-) trifluoromethyl-phenyl, (*o*-, *m*- *or p-)* anisyl, (*o*-, *m*- *or p-)* hydroxyphenyl, (*o*-, *m*- *or p-)* cyano-phenyl, (*o*-, *m*- *or p-)* methoxycarbonyl-phenyl, xylyl, mesityl, 1-naphthyl, 2-naphthyl, 6-methoxynaphthyl, phenanthryl, anthracyl, (2-, 3-,or 4-) pyridyl, (2-, 3-, 4-, 5-, 6-, 7- or 8-,) quinolyl, (1-, 3-, 4-, 5-, 6-, 7- or 8-,) isoquinolyl, 2- or 3-furyl, 2- or 3-thienyl, 2- or 3-pyrrolyl, (2-, 3-, 4-, 5-, 6-, or 7-,) indolyl. It is understood that all these aryl groups may be substituted with one or more substituents.

The preparation of the aromatic boronic acids is described by R. Köster in "Houben-Weyl Methoden der Organischen Chemie" Vol 13/3a, R Köster ed., Georg Thieme Verlag, Stuttgart, 1982, p 489-852.
A particular convenient method is to react an aromatic halide such as ArCl or ArBr with Mg turnings to prepare the Grignard reagent. Addition of a boronic ester such as B(OMe)₃ and hydrolysis with water after the Grignard has fully reacted with the boronic ester will furnish the aromatic boronic acids in good yield. Purification is by crystallization from a suitable solvent.

In a preferred embodiment of the invention the aryl boronic derivative (or its anhydride) is prepared from ArMgBr, wherein Ar is as defined above, and a boron ester with formula B(OR)₃, wherein R represents an alkyl group, preferably with 1-6 C-atoms, in particular methyl. Preferably the boronic acid derivative obtained is subsequently in the same pot, without purification or isolation subjected to the reaction with the olefinic unsaturated compound with formula R²-C=C-(R¹)Z, according to the invention.

The process according to the invention can also suitably be used in the preparation of an optically active compound, starting from (a mixture of the enantiomers of an) olefin, that contains a chiral centre elsewhere in the molecule and with preferably one of the two enantiomers being arylated.

In the arylation reaction use is preferably made of a molar ratio of metal present in the catalyst to substrate of between 1:10 and 1:1,000,000, in particular between 1:50 and 1:100,000. The ratio boronic acid to olefinic unsaturated compound may vary between wide limits, for instance between 0.8 arid 10, preferably between 1.0 and 5. The arylation reaction allows for a relatively low ratio boronic acid to olefinic unsaturated compound. Preferably a ratio between 1 and 2 equivalents boronic acid to olefinic unsaturated compound.

The temperature at which the asymmetric arylation reaction is carried out is generally a compromise between reaction velocity and enantioselectivity. The temperature and for instance lies between 0 and 160°C, preferably between 20 and 140°C, in particular between 40 and 130°C. Surprisingly it appeared possible to carry out the reaction in the higher temperature rang without significantly lowering the enantioselectivity. The asymmetric arylation reaction is preferably carried out with oxygen being excluded. Preferably the substrates and solvents do not contain any oxygen, peroxides or other oxidizing substances.

As solvent use can be made of: alcohols, for instance methanol ethanol or isopropanol; esters for instance ethylacetate or butyl acetate; amides for instance DMF, NMP or DMA; ethers, for instance diethyl ether, terahydrofuran, DME, or dioxane; ketones, for instance acetone, butanone or cyclohexanone, aromatic hydrocarbons, for instance toluene, halogenated hydrocarbons, for instance chlorobenzene or water. In case water is used as solvent it may be beneficial to add a phase transfer agent, for instance sodium dodecyl sulfate. If desired the solubility of the catalyst in water can be increased by providing the ligand with polar groups, for instance carboxylate or sulfonate safts. It usually is beneficial to add a small amount of water to the other solvents, preferably in an amount of one or more equivalents, more preferably 1-20 equivalents, with respect to the amount of boronic acid. Good results are obtained when a water/dioxane mixture was used with a dioxane/water ratio between 5:1 and 20:1. It is also possible to carry out the arylation reaction in ionic liquids as described in T. Welton, Chem. Rev., 99, 2071-2083 (1999), so that isolation of the product is simplified. If necessary the solubility of the ligand in the ionic liquid can be increased by providing the ligand with polar groups such as carboxylate salts. If the substrate is a liquid, the arylation reaction can also very suitably be carried out without a solvent; in this case water needs to be added as described above. If the substrate and/or the product hardly dissolves in the solvent the asymmetric arylation can also be performed as a slurry. If the product forms a slurry, its isolation is very much simplified.

The asymmetric arylation reaction will sometimes also be accelerated by adding a base. Suitable bases are nitrogen bases for instance triethylamine, substituted or non-substituted pyridines and mineral bases for example NaHCO₃, K₂CO₃, KOtBu or Cₛ₂CO₃.

The invention will be elucidated with reference to the following examples, without however being restricted by these.

### Example 1

A Schlenk tube under Argon was charged with Rh(acac)(C₂H₄)₂ (3.1 mg 12µmol), enantiopure ligand 1(2.5 equiv) and 1 mL of dry dioxane. This was stirred at ambient temperature for 10 min. 2-Cyclohexenone (0.4 mmol), 2 mmol of PhB(OH)₂ and 0.1 ml of H₂O was added and the mixture was then stirred at 100°C for 5h, cooled to room temperature. 5 ml of sat. NaHCO₃ was added and the mixture was extracted with EtOAc or diethylether (2x 5 ml). The organic layers were dried on Na₂SO₄ and the solvents were evaporated. 2 ml of Heptane/isopropylalcohol(IPA) 90/10 was added and the solution was filtered over a short SiO₂ column. The resulting solution was analysed by NMR and HPLC or GC.

### Examples 2-4

Example 1 was repeated using ligand 2, 28 and 30, respectively, the results are listed in table 1.

**Table 1**

| | | | |
|---|---|---|---|
| 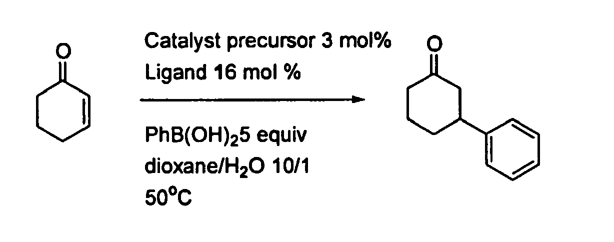 | | | |

| Experiment | Ligand | Yield. (%) | Ee (%) |
|---|---|---|---|
| 1 | 1 | 100 | 80 |
| 2 | 2 | 89 | 57 |
| 3 | 28 | 80* | 80 |
| 4 | 30 | <10 | 78 |

| | | | |
|---|---|---|---|
| * 72h at 100°C | | | |

### Examples 5-11

In examples 5-11 the same procedure was followed as in Example 1, but the solvents were changed. Results are listed in Table 2.

**Table 2**

| | | | |
|---|---|---|---|
| 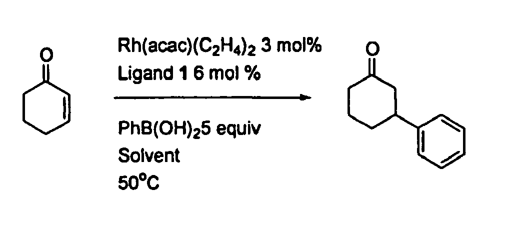 | | | |

| Exp. | Solvent | Yield (%) | e.e. (%) |
|---|---|---|---|
| 5 | PrOH | 100 (98) | 79 (84) |
| 6 | DMF | 70 | 64 |
| 7 | DME | 92 (93) | 84 (87) |
| 8 | MeOH | 100 (100) | 80 (82) |
| 9 | THF | 90 (93) | 83 (86) |
| 10 | NMP | 80 | 67 |
| 11 | Dioxane | 100(100) | 80 (86) |

The values within parentheses were obtained when a ligand rhodium ratio of 2.5 was used.

### Example 12

The same conditions were applied as in example 1 except that Rh(nbd)BF₄ was used as a catalyst precursor 3-Phenyl-cyclohexanone was obtained with an ee of 80% and with 13% yield.

### Examples 13-16

Example 1 was repeated now using different arylboronic acids. The results are listed in Table 3.

**Table 3**

| | | | |
|---|---|---|---|
| 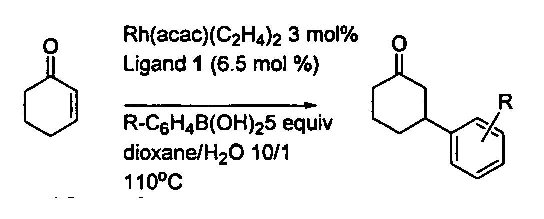 | | | |

| Exp. | R | Yield (%) | e.e. (%) |
|---|---|---|---|
| 1 | H | 100 | 86 |
| 13 | *o*-Me | 82 | 63 |
| 14 | *o*-MeO | 52 | 40 |
| 15 | *p*-MeO | 78 | 69 |
| 16 | *m*-NO₂ | 32 | 84 |

### Example 17

Example 1 was repeated with other olefinic substrates. The results are listed in Table 4.

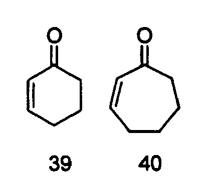

**Table 4**

| Exp. | enone | Conv (%) | e.e. (%) |
|---|---|---|---|
| 1 | 39 | 100 | 86 |
| 17 | 40 | 64 | 71 |

### Example 18

The experiment as described in Example 1 was repeated but using ligand **22** (R⁵ and R⁶ are both Me). After 1 h complete conversion was obtained. The e.e. of the 3-phenylcyclohexanone was 88%.

### Example 19

### Large-scale experiment

This experiment was conducted in a similar fashion as experiment 1. In it we used 2.00 g (21 mmol) of cyclohexenone, 1.2 equivalents of PhB(OH)₂, 0.6 mol% of an *in situ* generated catalyst from Rh(acac)(C₂H₄)₂ and 1.5 mol% of MonoPhos. Complete conversion was achieved at 100 °C after 1 h. The product was isolated in 92% yield and had an e.e. of 85%.

This experiment shows that because of the high rate of the reaction a much lower PhB(OH)₂ / olefin ratio can be used than in the work of Hayashi et al. where 5 equivalents are used.

### Examples 20-29

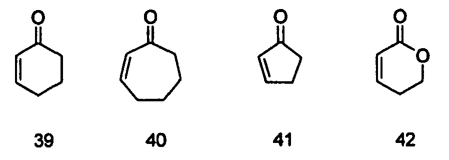

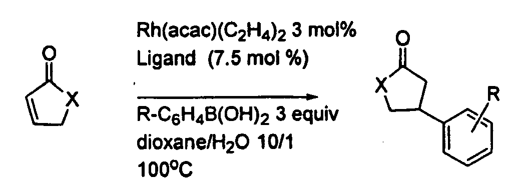

| Example | Enone | R-group in R-C₆H₄B(OH)₂ | Ligand | Conversion (%) | e.e. (%) |
|---|---|---|---|---|---|
| 1 | 39 | H | 1 | 100 | 86 |
| 20 | 39 | H | 1a | 100 | 94 |
| 21 | 39 | H | 22a | 100 | 89 |
| 22 | 39 | H | 22b | 100 | >98 |
| 23 | 41 | H | 22b | 100 | 85 |
| 24 | 40 | H | 22b | 95 | 96 |
| 25 | 42 | H | 22b | 100 | 87 |
| 26 | 39 | 2-F | 22b | 60 | 95 |
| 27 | 39 | 3-OMe | 22b | 100 | 98 |
| 28 | 39 | 3-Me | 22b | 100 | 96 |
| 29 | 39 | 4-Me | 22b | 100 | 98 |

### Comparative Experiment

For comparison, Example 1 was repeated with the ligands reported by Hayashi (BINAP) and with the ligand reported by Reetz (Phosphonite). The rate of the three reactions is depicted graphically in Figure 1. From this it is clear that under the same conditions according to the invention a much faster reaction is obtained.

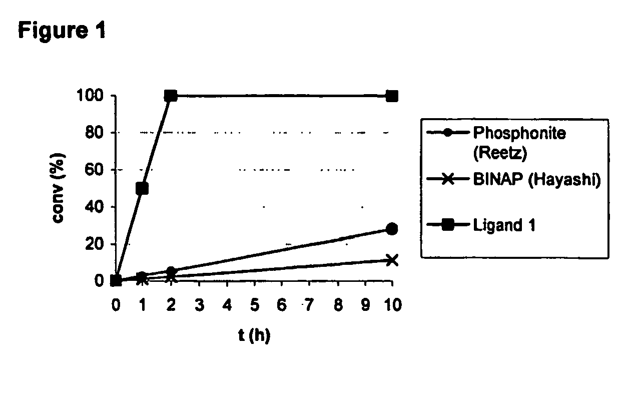

## Claims

1. Process for the preparation of enantiomerically enriched compounds with formula Ar - C(R¹) - C(R²) - Z wherein Ar represents an optionally substituted (hetero)aryl group, R¹ and R², each independently, represent H, an alkyl, (hetero)aryl, dialkylamino, amido, thioether, alkoxy or aryloxy group with the proviso that not both R¹ and R² represent H, or R¹ and R² form together with the C-atoms to which they are bound a (hetero)alkyl or (hetero) alkenyl ring and Z represents an electron withdrawing group, in which process a boronic acid derivate of formula Ar - B(OR³)OR⁴ or its anhydride, wherein Ar is the same as described above and R³ and R⁴, each independently, represent H or an alkyl group, is reacted with an olefinic unsaturated compound with formula R² - C = C - (R¹)Z, wherein R¹, R² and Z are the same as described above, in the presence of a transition metal catalyst comprising a transition metal which is Rh and an enantiomerically enriched ligand L, **characterized in that** L is an enantiomerically enriched ligand having the formula (I) 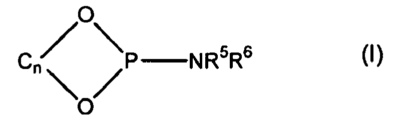 where Cₙ together with the two 0-atoms and the P-atom forms a substituted or non-substituted ring with 2-6 C-atoms, R⁵ and R⁶ each independently stand for H, an optionally substituted alkyl, aryl, alkaryl or aralkyl group, or represent the group with formula (II) 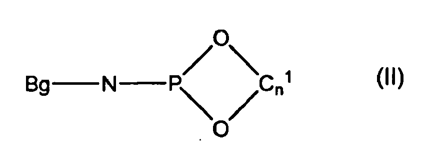 wherein Cₙ¹ may have the same meanings as given for Cₙ and Bg represents a bridging group, or R⁵ and R⁶ may form a heterocyclic ring together with the N-atom to which they are bound.

2. Process according to claim 1, wherein the transition metal catalyst is prepared using Rh (H₂C = CH₂)₂ acetylacetonate as a catalyst precursor.

3. Process according to any one of claims 1-2 where Cₙ stands for a chiral C4 chain that substantially has one particular configuration.

4. Process according to claim 3, wherein Cₙ together with the two O-atoms and the P-atom forms a ring with 4 C-atoms which 2 by 2 form part of an aryl group, a naphthyl group, or a tetrahydronaphtyl group.

5. Process according to any one of claims 1-4 wherein R⁵ and R⁶ each independently represent an alkyl group.

6. Process according to claim 5 wherein R⁵ and R⁶ both represent an ethyl group.

7. Process according to any one of claims 1-6 in which the reaction is carried out in the presence of a mixture of dioxane and water.

8. Process according to any one of claims 1-6 in which the reaction is carried out in the presence of an ionic liquid.

9. Process according to any one of claims 1-8 in which the catalyst is prepared in situ.

10. Process according to any one of claims 1-9, wherein first ArMgBr, wherein Ar is as defined above, and a boron ester or B(OR)₃, wherein R represents an alkyl group are reacted to form the boronic acid derivative, and wherein subsequently, without intermediate purification or isolation, the boronic acid derivative is subjected to reaction with the olefinic unsaturated compound with formula R²-C=C-(R¹)Z.

11. Catalyst comprising a transition metal M, an enantiomerically enriched ligand L, an extra ligand S and a counterion X wherein M is Rh, S is (C₂H₄)₂, X is acetylacetonate and L is a ligand with formula I 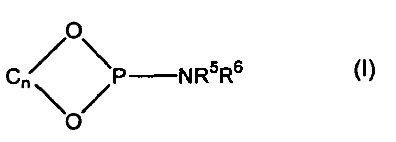 where Cₙ together with the two O-atoms and the P-atom forms a substituted or non-substituted ring with 2-6 C-atoms, R⁵ and R⁶ each independently stand for
H, an optionally substituted alkyl, aryl, alkaryl or aralkyl group, or represent the group with formula (II) 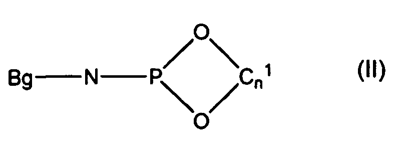 wherein Cₙ¹ may have the same meanings as given for Cₙ and Bg represents a bridging group, or R⁵ and R⁶ may form a heterocyclic ring together with the N-atom to which they are bound.

12. Catalyst according to claim 11, wherein Cₙ together with the two 0-atoms and the P-atom forms a ring with 4 C-atoms which 2 by 2 form part of an aryl group, a naphthyl group, or a tetrahydronaphtyl group.

13. Catalyst according to claim 11 or 12, wherein R⁵ and R⁶ each independently represent an alkyl group.

14. Catalyst according to claim 13, wherein R⁵ and R⁶ both represent an ethyl group.

## Patentansprüche

1. Verfahren zur Herstellung von enantiomerenangereicherten Verbindungen der Formel Ar-C(R¹)-C(R²)-Z, worin Ar für eine gegebenenfalls substituierte (Hetero)arylgruppe steht, R¹ und R² jeweils unabhängig voneinander für H oder eine Alkyl-, (Hetero)aryl-, Dialkylamino-, Amido-, Thioether-, Alkoxy- oder Aryloxygruppe stehen, mit der Maßgabe, daß R¹ und R² nicht beide für H stehen, oder R¹ und R² gemeinsam mit den C-Atomen, an die sie gebunden sind, einen (Hetero)alkyl- oder (Hetero)alkenylring bilden und Z für eine elektronenanziehende Gruppe steht, bei dem man ein Boronsäurederivat der Formel Ar-B(OR³)OR⁴ oder dessen Anhydrid, worin Ar die oben angegebene Bedeutung besitzt und R³ und R⁴ jeweils unabhängig voneinander für H oder eine Alkylgruppe stehen, in Gegenwart eines Übergangsmetallkatalysators, der ein Übergangsmetall, bei dem es sich um Rh handelt, und einen enantiomerenangereicherten Liganden L enthält, mit einer olefinischen ungesättigten Verbindung der Formel R²-C=C-(R¹)Z, worin R¹, R² und Z die oben angegebene Bedeutung besitzen, umsetzt, **dadurch gekennzeichnet, daß** L ein enantiomerenangereicherter Ligand der Formel (I) 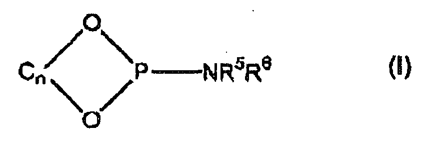 ist, wobei Cₙ gemeinsam mit den beiden O-Atomen und dem P-Atom einen substituierten oder unsubstituierten Ring mit 2-6 C-Atomen bildet, R⁵ und R⁶ jeweils unabhängig voneinander für H, eine gegebenenfalls substituierte Alkyl-, Aryl-, Alkaryl- oder Aralkylgruppe oder eine Gruppe der Formel (II) 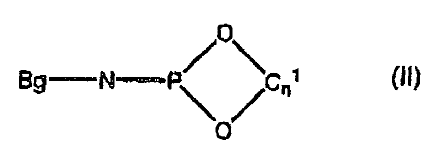 worin Cₙ¹ die gleichen Bedeutungen wie Cₙ haben kann und Bg für eine Brückengruppe steht, stehen oder R⁵ und R⁶ gemeinsam mit dem N-Atom, an das sie gebunden sind, einen heterocyclischen Ring bilden können.

2. Verfahren nach Anspruch 1, bei dem man den Übergangsmetallkatalysator unter Verwendung von Rh(H₂C=CH₂)₂-Acetylacetonat als Katalysatorvorläufer herstellt.

3. Verfahren nach einem der Ansprüche 1-2, bei dem Cₙ für eine chirale C4-Kette steht, die weitgehend eine bestimmte Konfiguration aufweist.

4. Verfahren nach Anspruch 3, bei dem Cₙ gemeinsam mit den beiden O-Atomen und dem P-Atom einen Ring mit 4 C-Atomen bildet, welche paarweise Teil einer Arylgruppe, einer Naphthylgruppe oder einer Tetrahydronaphthylgruppe sind.

5. Verfahren nach einem der Ansprüche 1-4, bei dem R⁵ und R⁶ jeweils unabhängig voneinander für eine Alkylgruppe stehen.

6. Verfahren nach Anspruch 5, bei dem R⁵ und R⁶ beide für eine Ethylgruppe stehen.

7. Verfahren nach einem der Ansprüche 1-6, bei dem man die Umsetzung in Gegenwart einer Mischung aus Dioxan und Wasser durchführt.

8. Verfahren nach einem der Ansprüche 1-6, bei dem man die Umsetzung in Gegenwart einer ionischen Flüssigkeit durchführt.

9. Verfahren nach einem der Ansprüche 1-8, bei dem man den Katalysator in situ herstellt.

10. Verfahren nach einem der Ansprüche 1-9, bei dem man zunächst ArMgBr, worin Ar die oben angegebene Bedeutung besitzt, und einen Borester bzw. B(OR)₃, worin R für eine Alkylgruppe steht, zu dem Boronsäurederivat umsetzt und danach das Boronsäurederivat ohne zwischengeschaltete Reinigung oder Isolierung der Umsetzung mit der olefinischen ungesättigten Verbindung der Formel R²-C=C-(R¹)Z unterwirft.

11. Katalysator, enthaltend ein Übergangsmetall M, einen enantiomerenangereicherten Liganden L, einen zusätzlichen Liganden S und ein Gegenion X, worin M für Rh steht, S für (C₂H₄)₂ steht, X für Acetylacetonat steht und L für einen Liganden der Formel (I) 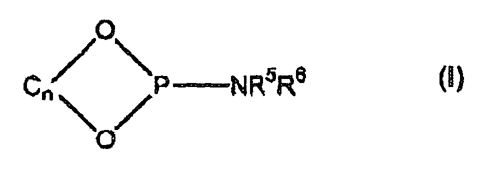 steht, wobei Cₙ gemeinsam mit den beiden O-Atomen und dem P-Atom einen substituierten oder unsubstituierten Ring mit 2-6 C-Atomen bildet, R⁵ und R⁶ jeweils unabhängig voneinander für H, eine gegebenenfalls substituierte Alkyl-, Aryl-, Alkaryl- oder Aralkylgruppe oder eine Gruppe der Formel (II) 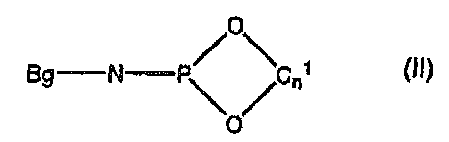 worin Cₙ¹ die gleichen Bedeutungen wie Cₙ haben kann und Bg für eine Brückengruppe steht, stehen oder R⁵ und R⁶ gemeinsam mit dem N-Atom, an das sie gebunden sind, einen heterocyclischen Ring bilden können.

12. Katalysator nach Anspruch 11, bei dem Cₙ gemeinsam mit den beiden O-Atomen und dem P-Atom einen Ring mit 4 C-Atomen bildet, welche paarweise Teil einer Arylgruppe, einer Naphthylgruppe oder einer Tetrahydronaphthylgruppe sind.

13. Katalysator nach Anspruch 11 oder 12, bei dem R⁵ und R⁶ jeweils unabhängig voneinander für eine Alkylgruppe stehen.

14. Katalysator nach Anspruch 13, bei dem R⁵ und R⁶ beide für eine Ethylgruppe stehen.

## Revendications

1. Procédé de préparation de composés énantiomériquement enrichis de formule Ar-C(R¹)-C(R²)-Z, dans laquelle Ar représente un groupe (hétéro)aryle éventuellement substitué, R¹ et R², chacun indépendamment, représentent un atome d'hydrogène, un groupe alkyle, un groupe (hétéro)aryle, un groupe dialkylamino, un groupe amido, un groupe thioéther, un groupe alcoxy ou un groupe aryloxy, à condition que R¹ et R² ne représentent pas tous les deux un atome d'hydrogène, ou R¹ et R² conjointement avec les atomes de carbone auxquels ils sont liés, forment un noyau (hétéro)alkyle ou (hétéro)alcényle et Z représente un groupe électro-attracteur, dans lequel procédé un dérivé de l'acide boronique de formule Ar-B(OR³)OR⁴ ou son anhydride, dans laquelle Ar est identique à celui décrit ci-dessus et R³ et R⁴ chacun indépendamment, représentent un atome d'hydrogène ou un groupe alkyle, est mis à réagir avec un composé insaturé oléfinique de formule R²-C=C-(R¹)Z, dans laquelle R¹, R² et Z sont identiques à ceux décrits ci-dessus, en présence d'un catalyseur à métal de transition comprenant un métal de transition, qui est le Rh, et un ligand énantiomériquement enrichi L, **caractérisé en ce que** L est un ligand énantiomériquement enrichi de formule (I) 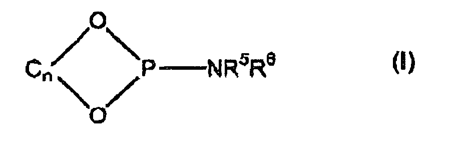 dans laquelle Cₙ, conjointement avec les deux atomes d'oxygène et l'atome de phosphore, forme un noyau substitué ou non substitué renfermant de 2 à 6 atomes de carbone, R⁵ et R⁶, chacun indépendamment, représentent un atome d'hydrogène, un groupe alkyle, un groupe aryle, un groupe alkaryle ou un groupe aralkyle, éventuellement substitué, ou représentent le groupe de formule (II) 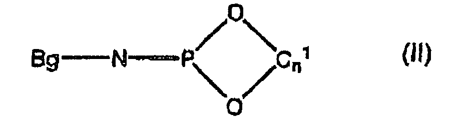 dans laquelle Cₙ¹ peut présenter les mêmes significations que celles indiquées pour Cₙ et Bg représente un groupe de pontage, ou R⁵ et R⁶ peuvent former un noyau hétérocyclique conjointement avec l'atome d'azote auquel ils sont liés.

2. Procédé selon la revendication 1, dans lequel le catalyseur à métal de transition est préparé en utilisant du Rh(H₂C=CH₂)₂-acétylacétonate en tant que précurseur de catalyseur.

3. Procédé selon l'une quelconque des revendications 1-2, dans lequel Cₙ représente une chaîne en C4 chirale qui présente substantiellement une configuration particulière.

4. Procédé selon la revendication 3, dans lequel Cₙ, conjointement avec les deux atomes d'oxygène et l'atome de phosphore, forme un noyau renfermant 4 atomes de carbone qui, deux par deux, font partie d'un groupe aryle, d'un groupe naphtyle ou d'un groupe tétrahydronaphtyle.

5. Procédé selon l'une quelconque des revendications 1-4, dans lequel R⁵ et R⁶ représentent, chacun indépendamment, un groupe alkyle.

6. Procédé selon la revendication 5, dans lequel R⁵ et R⁶ représentent, tous les deux, un groupe éthyle.

7. Procédé selon l'une quelconque des revendications 1 à 6, dans lequel la réaction est effectuée en présence d'un mélange de dioxane et d'eau.

8. Procédé selon l'une quelconque des revendications 1 à 6, dans lequel la réaction est effectuée en présence d'un liquide ionique.

9. Procédé selon l'une quelconque des revendications 1 à 8, dans lequel le catalyseur est préparé in situ.

10. Procédé selon l'une quelconque des revendications 1 à 9, dans lequel, tout d'abord, du ArMgBr, dans lequel Ar est tel que défini ci-dessus, et un ester boré ou B(OR)₃, dans lequel R représente un groupe alkyle, sont mis à réagir pour former le dérivé de l'acide boronique, et dans lequel, ensuite, sans purification ou isolation intermédiaire, le dérivé de l'acide boronique est soumis à une réaction avec le composé insaturé oléfinique de formule R²-C=C-(R¹)Z.

11. Catalyseur comprenant un métal de transition M, un ligand énantiomériquement enrichi L, un ligand supplémentaire S et un contre-ion X, où M est le Rh, S est un groupe (C₂H₄)₂, X est un groupe acétylacétonate et L est un ligand de formule (I) 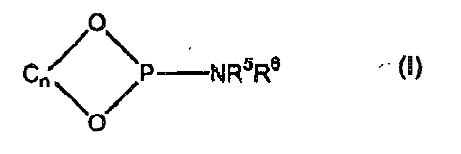 dans laquelle Cₙ, conjointement avec les deux atomes d'oxygène et l'atome de phosphore, forme un noyau substitué ou non substitué renfermant de 2 à 6 atomes de carbone, R⁵ et R⁶, chacun indépendamment, représentent un atome d'hydrogène, un groupe alkyle, un groupe aryle, un groupe alkaryle ou un groupe aralkyle, éventuellement substitué, ou représentent le groupe de formule (II) 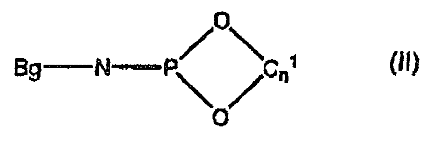 dans laquelle Cₙ, peut présenter les mêmes significations que celles indiquées pour Cₙ et Bg représente un groupe de pontage, ou R⁵ et R⁶ peuvent former un noyau hétérocyclique conjointement avec l'atome d'azote auquel ils sont liés.

12. Catalyseur selon la revendication 11, dans lequel Cₙ, conjointement avec les deux atomes d'oxygène et l'atome de phosphore, forme un noyau renfermant 4 atomes de carbone qui, deux par deux, font partie d'un groupe aryle, d'un groupe naphtyle ou d'un groupe tétrahydronaphtyle.

13. Catalyseur selon la revendication 11 ou 12, dans lequel R⁵ et R⁶ représentent chacun indépendamment un groupe alkyle.

14. Catalyseur selon la revendication 13, dans lequel R⁵ et R⁶ représentent tous les deux un groupe éthyle.
